Europäisches Patentamt

European Patent Office

Office européen des brevets

(19)

(11) Numéro de publication: **0 048 690**
**B1**

(12) **FASCICULE DE BREVET EUROPEEN**

(45) Date de publication du fascicule du brevet:
24.07.85

(51) Int. Cl.⁴: **H 01 S 3/03, H 01 S 3/045**

(21) Numéro de dépôt: 81810359.0

(22) Date de dépôt: 01.09.81

(54) Tube à gaz à décharge pour émission laser de puissance à très haute stabilité.

(30) Priorité: 23.09.80 CH 7117/80
03.11.80 FR 8023496

(43) Date de publication de la demande:
31.03.82 Bulletin 82/13

(45) Mention de la délivrance du brevet:
24.07.85 Bulletin 85/30

(84) Etats contractants désignés:
CH DE FR GB IT LI NL

(56) Documents cités:
FR - A - 2 086 023
GB - A - 2 020 890
US - A - 3 437 950
US - A - 3 763 442

ZEITSCHRIFT FÜR ANGEWANDTE PHYSIK, vol. 26, no. 3, février 1969 BERLIN (DE) K. BAUSE et al.: "Hochleistungsionen laser" pages 196-200

(73) Titulaire: LASAG AG, Bernstrasse 11, CH-3600 Thun (CH)

(72) Inventeur: Scheuter, Karl-Georg, Blochstrasse 31, CH-3653 Oberhofen (CH)

(74) Mandataire: Schneider, Jürg et al, c/o Société Générale de l'Horlogerie Suisse S.A. ASUAG Faubourg du Lac 6, CH-2501 Bienne (CH)

## Description

La présente invention est relative à un tube à gaz à décharge pour émission laser de puissance à très haute stabilité.

Les dispositifs d'émission laser de puissance continue ou pulsée dans le spectre visible et ultraviolet sont le plus souvent actuellement des dispositifs dans lequel le milieu d'amplification laser est constitué par un gaz ionisé tel que l'argon $Ar^{++}$. De tels dispositifs sont caractérisés du point de vue de leur fonctionnement par une très forte densité de courant au niveau du milieu d'amplification, densité de l'ordre de 450 A/cm² nécessitant une alimentation en énergie électrique très importante du dispositif compte tenu d'un rendement global d'émission peu élevé de l'ordre de 0,5‰. La contre-partie de tels systèmes est la nécessité de munir de tels dispositifs d'un système très efficace d'évacuation de la chaleur, énergie dégradée de l'énergie d'alimentation électrique.

Des tubes à gaz à décharge pour émission laser de ce type ont été décrits dans le brevet suisse numéro 522 287 dans lequel le corps du tube proprement dit ou chambre d'ionisation est constitué d'un empilement d'éléments comportant chacun des perforations constituant, après empilement des éléments, des canaux de circulation d'un liquide de refroidissement, et où le circuit de recirculation du gaz, milieu d'amplification laser, est effectué par un by-pass unique reliant les chambres de cathode et d'anode reliées d'autre part par la chambre d'ionisation.

Le fonctionnement de tels dispositifs n'est pas satisfaisant dans la mesure où, d'une part, le montage du corps du tube, ou chambre d'ionisation, par empilement d'éléments apparaît très complexe du fait de la nécessité d'assurer au niveau de chaque perforation constituant, après empilement, les canaux de circulation du fluide réfrigérant, une étanchéité parfaite des jonctions. La multiplicité des jonctions entraîne une augmentation du risque de fuite vers la chambre d'ionisation du liquide réfrigérant avec pour conséquence directe une déstabilisation de l'émission laser par modification locale des paramètres de conductibilité et de rigidité diélectrique du milieu amplificateur de la chambre d'ionisation. Cette déstabilisation peut entraîner même à l'extrême une destruction locale de la paroi du corps du tube ou de la jonction par amorçage d'arc avec le plasma de décharge.

D'autre part, l'existence pour la recirculation du gaz de décharge d'un unique by-pass de section nécessairement voisine de celle de la chambre d'ionisation, en vue d'assurer un écoulement homogène de ce gaz, présente, avec un risque non négligeable d'ionisation du gaz à l'intérieur même du by-pass et de destruction du tube, un défaut de stabilité des conditions d'écoulement du gaz. Ce défaut se manifeste, notamment lors de l'amorçage de la décharge, par l'apparition d'une onde de pression entraînant en tout point de circulation du gaz une oscillation transitoire de la pression du gaz et une modulation correspondante de la densité de courant et de l'intensité d'émission laser correspondante. De tels dispositifs ne peuvent en tout cas prétendre atteindre des degrés de stabilité d'émission meilleurs que $\pm$ 10% de la puissance maximale d'émission sur une durée de $^1/_{10}$ de seconde.

Le brevet américain no 3 763 442 décrit également un tube à gaz à décharge pour émission laser dans lequel la chambre d'ionisation et le circuit de recirculation du gaz sont constitués par des canaux percés dans un cylindre en céramique d'un seul tenant. Des ailettes de refroidissement sont soudées à une couche métallique déposée sur le cylindre de céramique et entourées d'un boîtier qui contient le fluide de refroidissement.

Le perçage de la chambre d'ionisation et des canaux de recirculation du gaz dans une pièce massive est une opération délicate qui augmente sensiblement le prix de revient d'un tel tube. En outre, le fait que les canaux de recirculation sont contenus dans la même pièce que la chambre d'ionisation augmente la distance qui sépare celle-ci des ailettes de refroidissement.

L'évacuation de la chaleur produite dans cette chambre d'ionisation se fait donc dans des conditions assez défavorables.

Le but de la présente invention est de proposer un tube à gaz à décharge qui ne présente pas les inconvénients mentionnés ci-dessus, c'est-à-dire qui soit facile à fabriquer tout en permettant une bonne évacuation de la chaleur produite dans la chambre d'ionisation et en assurant une bonne stabilité de l'émission laser.

Ce but est atteint par le tube à gaz à décharge revendiqué.

Le tube à gaz à décharge pour émission laser continue selon l'invention peut en particulier être utilisé, compte tenu des performances obtenues par sa mise en œuvre, dans les systèmes d'impression ou d'offset, les matériaux à impression étant sensibles au rayonnement de faible longueur d'onde du spectre visible ou à l'ultraviolet, dans les systèmes de séparation isotopique et dans les techniques de photobiologie ou médicales, ainsi qu'en vue de la télécommunication pour mesure de position d'un vaisseau tel qu'un sous-marin à partir de l'émission d'une station terrestre vers un satellite relais.

L'invention sera mieux comprise à l'aide de la description et des dessins ci-après dans lesquels les mêmes références représentent les mêmes éléments et où:

— la figure 1 représente en perspective et en arraché le tube à gaz à décharge selon l'invention;

— les figures 2a, 2b, 2c représentent un détail de réalisation d'un des éléments constitutifs du tube à gaz à décharge selon figure 1,

— la figure 3a représente, en coupe, selon un plan de symétrie longitudinale de la figure 1, un autre détail de réalisation d'un élément constitutif du tube à gaz selon l'invention;

— la figure 3b représente une coupe selon un plan longitudinal de symétrie de la figure 1;

– la figure 3c représente une coupe selon un plan perpendiculaire à l'axe longitudinal de symétrie de la figure 1.

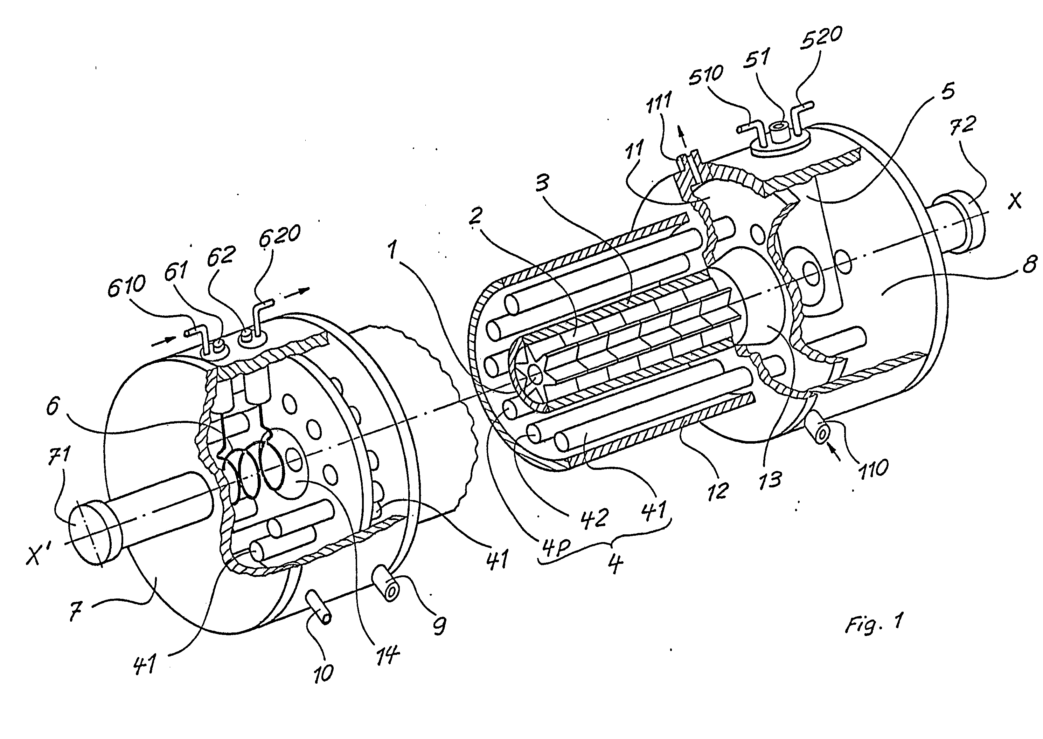

Selon la figure 1, le tube à gaz à décharge de l'invention comprend une chambre d'ionisation 1 formée par un élément tubulaire d'axe de symétrie longitudinal x'x. L'élément tubulaire est muni d'une ouverture centrale formant la chambre d'ionisation 1. L'élément tubulaire peut être formé soit par un tube en céramique soit par un empilement de disques percés d'un trou en leur centre. L'élément tubulaire comporte en outre un échangeur de chaleur 2 disposé sur la paroi externe de la chambre d'ionisation. Une enveloppe interne 3 contient la chambre d'ionisation 1 et l'échangeur de chaleur 2. L'enveloppe interne 3 permet, en fonctionnement, la circulation d'un fluide caloporteur entre l'enveloppe interne 3 et la paroi externe de la chambre d'ionisation munie de l'échangeur de chaleur. Le fluide caloporteur peut par exemple être constitué par de l'eau déionisée. Le tube à gaz à décharge de l'invention comporte en outre un circuit de recirculation 4 du gaz milieu d'amplification laser. Le circuit de recirculation du gaz 4 permet une recirculation du gaz, tel que de l'argon par exemple, entre la chambre d'ionisation 1, une chambre d'anode 8 comportant une anode 5 et une chambre de cathode 7 comportant une cathode 6, la chambre d'ionisation étant également en communication avec la chambre d'anode et la chambre de cathode. Le circuit de recirculation du gaz est constitué par une pluralité de circuits de recirculation élémentaires notés sur la figure 1, 41, 42, 4p et présentant chacun une résistance à l'écoulement du gaz supérieure à celle de la chambre d'ionisation. La chambre de cathode 7 comporte la cathode 6 formée par un enroulement conducteur d'axe longitudinal confondu avec l'axe x'x. L'enroulement de cathode est connecté aux plots de connexion 61, 62. Un circuit de refroidissement 610, 620 permet le refroidissement des plots de cathode afin d'empêcher le vieillissement des joints d'étanchéité de la chambre de cathode. Une vanne 9 permet pour la mise en fonctionnement du tube d'effectuer le vide dans l'ensemble du tube, le gaz milieu d'amplification laser étant ensuite admis par une vanne d'entrée 10. La chambre de cathode 7 comporte en outre centré sur l'axe x'x un miroir 71 constitutif du résonateur laser. Le miroir 71 a par exemple un coefficient de réflexion de l'ordre de 96% permettant la transmission du rayonnement laser utile.

La chambre d'anode 8 comporte une anode 5 à haute stabilité spatiale de densité de courant permettant la transmission du rayonnement laser vers un deuxième miroir du résonateur laser 72 également situé sur l'axe x'x. L'anode 5 est reliée à un plot de connexion d'anode 51 et comporte un circuit de refroidissement 510, 520. La chambre d'anode et/ou la chambre de cathode comportent une chambre étanche 11 d'admission du fluide caloporteur en communication avec l'espace délimité par l'enveloppe interne 3 et l'échangeur de chaleur 2. Le fluide caloporteur est mis en circulation par des vannes telles que 110 et 111. Une enveloppe externe 12 assure une protection mécanique du circuit de recirculation du gaz 4, l'enveloppe externe 12 formant avec l'enveloppe interne 3 également une chambre étanche. La chambre d'ionisation 1, l'échangeur de chaleur 2, l'enveloppe interne 3, le circuit de recirculation du gaz 4, l'enveloppe externe 12, la chambre d'anode 8 et de cathode 7 forment une structure sensiblement de révolution par rapport à l'axe x'x du résonateur laser formé par les miroirs 71 et 72. L'échangeur de chaleur 2 est constitué par des ailettes de refroidissement. Dans le cas où l'élément tubulaire formant la chambre d'ionisation 1 est en céramique, les ailettes sont constituées par un manchon métallique en contact avec la paroi externe de l'élément tubulaire.

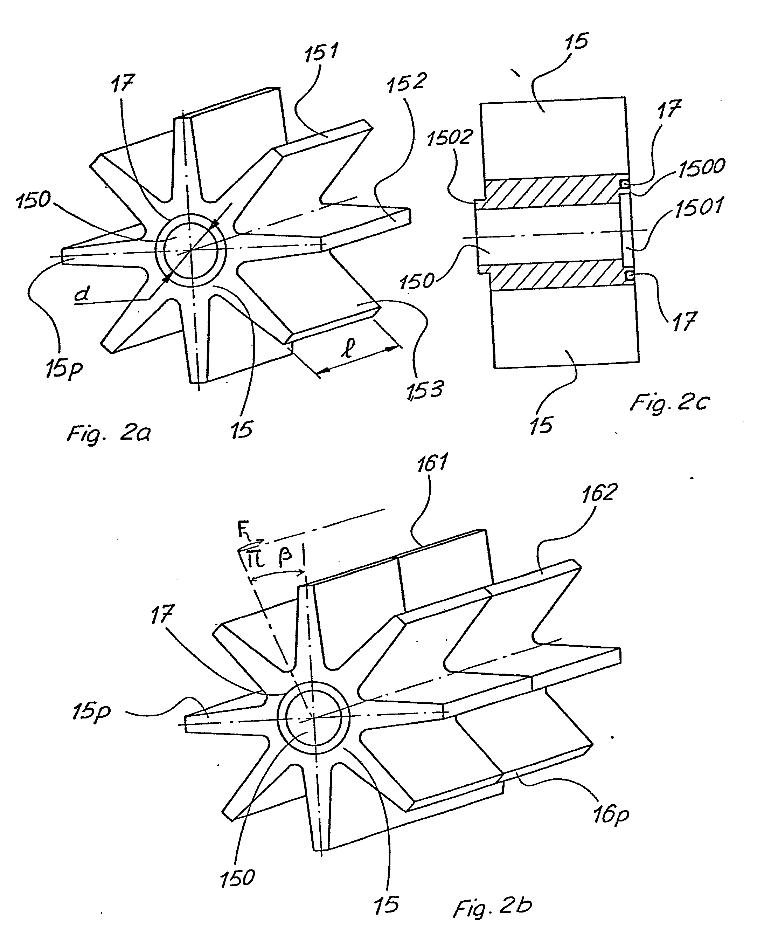

Conformément à la figure 2a, 2b, 2c l'élément tubulaire formant la chambre d'ionisation 1 est constitué par un empilement jointif d'éléments 15 en forme de disques concentriques munis d'une ouverture centrale circulaire 150. Les ailettes de refroidissement sont formées dans ce cas au niveau de chaque élément constitutif de chambre d'ionisation par une pluralité d'éminences radiales notées 151, 152 à 15p sur les figures 2a à 2c.

Selon les figures 2a et 2b, les éminences 151 à 15p de chaque élément sont distribuées, par rapport à un plan de référence tel que le plan $\pi$, selon un même motif, sur la périphérie de chaque disque constituant chaque élément. Les éminences de deux éléments consécutifs après empilement, ainsi que représenté figure 2b, sont alignées de manière à former sur la surface externe de la chambre d'ionisation une pluralité d'ailettes 161, 162, à 16p distribuées chacune selon une génératrice de l'empilement formant l'élément tubulaire.

Afin d'assurer un meilleur échange de chaleur ainsi que symbolisé figure 2b par la flèche F, chaque élément 15 peut être décalé en rotation d'un angle $\alpha$ donné autour de l'axe x'x par rapport à l'élément suivant de manière à former une pluralité d'ailettes sensiblement distribuées selon une spirale par rapport aux génératrices de l'élément tubulaire formant la chambre d'ionisation 1. Un décalage d'un angle $\alpha$ égal sensiblement à l'angle de la demi-ouverture $\beta$ de deux éminences consécutives d'un même élément permet la formation d'un échangeur de chaleur 2 en chicane permettant également une meilleure évacuation de la chaleur. Selon la figure 2c, qui représente une vue en coupe selon le plan $\pi$ de l'élément représenté figure 2a, chaque élément comporte en outre sur une de ses faces d'empilement au moins un joint d'étanchéité annulaire 17. Les joints d'étanchéité sont par exemple des joints polymères. Les éléments peuvent sans sortir du cadre de la présente invention comporter deux ou plusieurs joints sur une ou chacune des faces d'empilement. Afin de préserver le ou les joints d'étanchéité 17 de l'exposition au plasma de décharge constitué principalement d'ions argon $Ar^{++}$ et au rayonnement ultraviolet facteur important de vieillissement, chaque élément 15 comporte sur une de ses faces d'empilement un redent 1502 et, sur son autre face d'empilement, un logement 1501. Le redent 1502 s'engage, lors de l'empilement, dans le logement 1501 de l'élément voisin. Une gorge 1500 à la périphérie du logement 1501 reçoit le joint d'étanchéité 17. Le redent 1502, le logement 1501 et la gorge 1500 forment une protection pour le joint d'étanchéité 17. Le rapport 1/d de la longueur de chaque élément au diamètre d de l'ouverture centrale est inférieur à 3, $1/d < 3$. A titre d'exemple chaque élément 15 est constitué par un alliage des métaux compris dans le groupe aluminium, magnésium, silicium. Chaque élément 15 comporte une couche isolante d'alumine. Les éléments 15 sont par exemple débités à partir d'un profilé de cet alliage, chaque élément étant ensuite soumis à un traitement d'anodisation dure de manière à obtenir une couche d'alumine d'épaisseur supérieure à 20 µm sur toute la surface de chaque élément. De même l'ensemble des parties du tube à décharge soumises à l'action du plasma de décharge sont constituées par ce même matériau connu sous le nom commercial de «Anticorodal» ainsi que l'enveloppe interne 3, l'enveloppe externe 12 et les chambres d'anode 8 et de cathode 7.

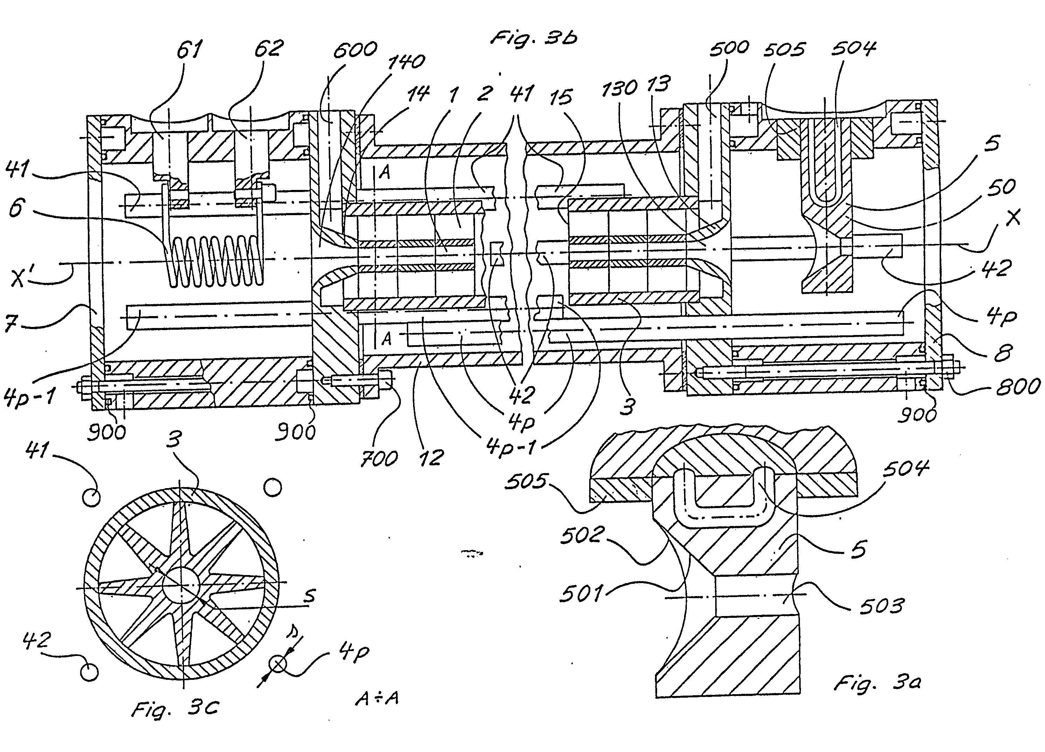

Selon la figure 3a, l'anode 5 à haute stabilité spatiale de densité de courant est constituée par un élément conducteur 50 formé par un cylindre métallique d'axe perpendiculaire à l'axe x'x de la chambre d'ionisation 1. L'élément conducteur 50 comporte une cavité ayant un axe de révolution confondu avec l'axe x'x de la chambre d'ionisation 1 et formant une arête vive 502 avec la surface extérieure de l'élément conducteur 50 tournée vers la cathode 6. Cette cavité est formée d'un tronc de cône 501, d'angle au sommet sensiblement égal à $\pi/2$, qui s'élargit en direction de la cathode 6 et qui est prolongé en direction opposée par une couverture 503 sensiblement cylindrique permettant le passage du rayonnement laser vers le miroir 72. L'élément conducteur 50 est monté dans un manchon isolant 505 en téflon par exemple, l'anode étant portée en fonctionnement à une tension de l'ordre de 250 V, et comporte un circuit 504 de refroidissement. Une telle structure d'anode combinée à un choix convenable de l'espacement entre l'anode et l'extrémité de la chambre d'ionisation 1 permet par effet de bord au niveau du champ électrique au voisinage de l'anode d'obtenir une distribution de celui-ci pour laquelle l'absorption du faisceau laser est notablement diminuée. L'élément conducteur 50 est par exemple constitué par un cylindre de cuivre pur.

Selon la figure 3b, qui représente une coupe selon un plan de symétrie longitudinal de la figure 1, l'élément tubulaire constituant la chambre d'ionisation 1 comporte à chaque extrémité de celle-ci un élément d'adaptation 13, 14 entre la chambre d'ionisation et la chambre d'anode 8 et, respectivement, la chambre de cathode 7 permettant notamment l'adaptation progressive d'impédance de ces différentes chambres. Chaque élément d'adaptation 13, 14 est constitué par une pièce sensiblement cônique d'axe longitudinal confondu avec l'axe longitudinal de la chambre d'ionisation x'x. Chaque pièce 13, 14 comporte un alésage interne central 130, 140 de forme évasée et de révolution autour de l'axe longitudinal de la pièce. La plus grande ouverture de chaque alésage central est disposée vis-à-vis de l'anode 5 et de la cathode 6 du tube respectivement. Le plus grand diamètre de l'alésage 130 est sensiblement égal au diamètre de la base du tronc de cône de la cavité d'anode 502. Le plus grand diamètre de l'alésage 140 est sensiblement égal au diamètre de l'enroulement constituant la cathode 6. Le profil de l'alésage central de chaque pièce correspond sensiblement à une décroissance exponentielle du diamètre de l'alésage à partir de l'ouverture maximale de chaque pièce jusqu'à une valeur égale à celle du diamètre de l'ouverture centrale 150 des éléments, la décroissance intervenant au maximum sur une longueur équivalente à celle de trois éléments. Un tel arrangement de la structure des éléments d'adaptation 13 et 14 permet, du fait du maintien de conditions d'écoulement du gaz très proches de l'écoulement laminaire, en particulier dans les phases d'initiation des émissions continues ou pulsées, une atténuation très importante de l'érosion ionique des surfaces de l'alésage. Celles-ci comportant, ainsi que décrit précédemment, un revêtement d'oxyde d'alumine obtenu par anodisation dure permettent une reproductibilité parfaite des conditions de l'écoulement du gaz et de décharge dans des conditions constantes d'adaptation d'impédance entre la chambre d'anode, la chambre de cathode et chambre d'ionisation respectivement.

Selon les figures 3b et 3c, la figure 3c représentant une coupe transversale de la figure 1, les circuits de recirculation élémentaires 41, 42, à 4p sont constitués chacun par au moins un tube de section s inférieure à la section S de la chambre d'ionisation 1. Les tubes sont des tubes thermo résistants isolants en verre ou en quartz. La section s de chaque tube est voisine de S/p où S est la section de la chambre d'ionisation et p le nombre de circuits de recirculation élémentaires. De préférence la section s de chaque tube est supérieure à S/p de 10 à 20% environ. Selon le mode de réalisation particulier de la figure 3b, les circuits de recirculation élémentaires sont chacun constitués par deux tubes en chicane. Cette disposition permet d'augmenter la longueur de recirculation du gaz, la partie de chaque tube comprise entre l'enveloppe extérieure 12 et l'enveloppe interne 3 ayant une longueur supérieure à la demi-longueur de la chambre d'ionisation. Dans la figure 3b, le tube 41 est associé au tube 42 et le tube 4p-1 au tube 4p pour former chaque fois un circuit élémentaire. La pluralité de circuits de recirculation et leur disposition en chicane permettent une amélioration de la stabilité d'émission et des paramètres de décharge du tube. Cette amélioration est due à l'augmentation de la résistance électrique de chaque circuit de recirculation, ce qui supprime pratiquement le risque de décharge dans ces circuits, et par l'augmentation de la résistance à l'écoulement du gaz dans chacun des circuits élémentaires, ce qui diminue sensiblement les oscillations et les variations de pression du gaz dans le tube et donc les variations de densité de courant correspondantes.

Le tube à gaz à décharge ainsi décrit permet d'obtenir compte tenu de ses caractéristiques techniques une stabilité d'émission inférieure à 1,5% de la puissance maximale atteinte. Cette dernière est de 60 W en fonctionnement continu pour les longueurs d'onde bleu-vert (457,9 nm à 514,5 nm) et 15 W en rayonnement ultraviolet (351,1 nm et 363,7 nm).

L'assemblage du tube à gaz à décharge de l'invention est effectué par introduction de l'empilement des éléments 15 dans l'enveloppe interne 3, les éléments ayant un diamètre sensiblement égal à celui de l'enveloppe interne 3. L'ensemble ainsi constitué est assemblé avec l'enveloppe externe 12 et avec les chambres de cathode et d'anode par l'intermédiaire de joints d'étanchéité 900 et maintenu en pression à l'aide de vis et écrous de serrage tels que 700 et 800.

**Revendications**

1. Tube à gaz à décharge à haute densité de courant pour émission laser à très haute stabilité d'émission comprenant une chambre d'ionisation (1) formée d'un élément tubulaire muni d'une ouverture centrale circulaire, comportant
– un échangeur de chaleur (2) comprenant des ailettes de refroidissement (161, 162, 16p) disposées sur la paroi externe de la chambre d'ionisation (1),
– une enveloppe interne (3) entourant lesdites ailettes de refroidissement (161, 162, 16p) et permettant, en fonctionnement, la circulation d'un fluide caloporteur entre ladite enveloppe interne (3) et la paroi externe de la chambre d'ionisation (1),
– un circuit de recirculation du gaz (4) comprenant une pluralité de circuits de recirculation élémentaires (41, 42, 4p) présentant chacun une résistance à l'écoulement du gaz supérieure à celle de la chambre d'ionisation (1),
– une anode (5) à haute stabilité de densité de courant permettant la transmission du rayonnement laser,
caractérisé en ce que
– l'élément tubulaire constituant la chambre d'ionisation (1) est constitué par un empilement jointif d'éléments métalliques (15) concentriques comportant chacun une ouverture centrale circulaire (150) et une pluralité d'éminences radiales (151, 152, 15p) formant lesdites ailettes,
et en ce que
– les circuits de recirculation élémentaires (41, 42, 4p) sont disposés à l'extérieur de l'enveloppe interne (3).

2. Tube à gaz à décharge selon la revendication 1, caractérisé en ce que lesdites éminences (151, 152, 15p) sont distribuées, par rapport à un plan de référence, selon un même motif sur la périphérie de chaque élément (15), les éminences de deux éléments consécutifs étant alignées de manière que lesdites ailettes (161, 162, 16p) soient disposées chacune selon une génératrice dudit empilement.

3. Tube à gaz à décharge selon la revendication 1, caractérisé en ce que chaque élément (15) comporte en outre sur une de ses faces d'empilement au moins un joint d'étanchéité annulaire (17).

4. Tube à gaz à décharge selon la revendication 3, caractérisé en ce que chaque élément (15) comporte sur une de ses faces d'empilement un redent (1502) concentrique à l'ouverture centrale pour préserver le joint d'étanchéité de l'exposition au rayonnement ultraviolet et au plasma de décharge et sur l'autre de ses faces d'empilement un logement (1501) destiné à recevoir le redent (1502) de l'élément (15) adjacent.

5. Tube à gaz à décharge selon la revendication 1, caractérisé en ce que chaque élément (15) comporte sur une de ses faces d'empilement au moins deux joints d'étanchéité annulaires (17) concentriques.

6. Tube à gaz à décharge selon l'une des revendications 1 à 5, caractérisé en ce que chaque élément (15) est constitué par un alliage des métaux compris dans le groupe aluminium, magnesium, silicium, chaque élément (15) comportant une couche isolante d'alumine.

7. Tube à gaz à décharge selon la revendication 1, caractérisé en ce que les circuits de recirculation élémentaires (41, 42, 4p) sont constitués chacun par au moins un tube de section inférieure à la section de la chambre d'ionisation (1).

8. Tube à gaz à décharge selon la revendication 7, caractérisé en ce que la section s de chaque tube est voisine de S/p où S est la section de la chambre d'ionisation (1) et p le nombre de circuits de recirculation élémentaires.

9. Tube à gaz à décharge selon les revendications 7 ou 8, caractérisé en ce que chaque circuit de recirculation élémentaire (41, 42, 4p) est constitué par deux tubes disposés en chicane, chacun des tubes ayant une longueur supérieure à la demi-longueur de la chambre d'ionisation (1).

10. Tube à gaz à décharge selon la revendication 1, caractérisé en ce que l'anode (5) à haute stabilité de densité de courant permettant la transmission du rayonnement laser est constituée par un élément conducteur (50) comportant une cavité ayant un axe de révolution confondu avec l'axe de la chambre d'ionisation (1) et formant une arête vive (502) avec la surface extérieure de l'élément conducteur (50) tournée vers la cathode (6) du tube à décharge.

11. Tube à décharge selon la revendication 10, caractérisé en ce que l'élément conducteur (50) est constitué par un cylindre métallique ayant un axe perpendiculaire à l'axe de la chambre d'ionisation (1), la cavité étant formée dans le cylindre selon un tronc de cône (501) s'élargissant en direction de la cathode (6) et prolongée en direction opposée par une ouverture (503) sensiblement cylindrique permettant le passage du rayonnement laser.

12. Tube à gaz à décharge selon la revendication 11, caractérisé en ce que l'élément conducteur (50) est constitué par du cuivre pur.

13. Tube à gaz à décharge selon la revendication 1, caractérisé en ce que l'élément tubulaire constituant la chambre d'ionisation (1) comporte à chaque extrémité de celle-ci un élément d'adaptation (13, 14) de l'impédance de la chambre d'ionisation (1) à l'impédance de la chambre d'anode (18) et, respectivement, de la chambre de cathode (7).

14. Tube à gaz à décharge selon la revendication 13, caractérisé en ce que chaque élément d'adaptation (13, 14) comporte un alésage central évasé ayant un axe de révolution confondu avec l'axe de la chambre d'ionisation (1), la plus grande ouverture de chaque alésage central étant disposée vis-à-vis de l'anode (5) et, respectivement, de la cathode (6).

**Claims**

1. Gas discharge tube with high current density for laser emission at very high emission stability including an ionisation chamber (1) formed by a tubular element provided with a central circular opening, comprising
– a heat exchanger (2) including cooling fins (161, 162, 16p) arranged on the external wall of the ionisation chamber (1),
– an internal envelope (3) surrounding said cooling fins (161, 162, 16p) and enabling in operation, the circulation of a heat transporting fluid between said internal envelope (3) and the external wall of the ionisation chamber (1),
– a gas recirculation circuit (4) including a plurality of basic recirculation circuits (41, 42, 4p) each exhibiting a resistance to gas flow greater than that of the ionisation chamber (1),
– an anode (5) with high current density stability permitting transmission of the laser beam, characterized in that
– the tubular element forming the ionisation chamber (1) is formed by a joined stacking of concentric metallic elements (15) each comprising a circular central opening (150) and a plurality of radial projections (151, 152, 15p) forming said fins, and in that
– the basic recirculation circuits (41, 42, 4p) are arranged at the exterior of the internal envelope (3).

2. Gas discharge tube according to claim 1, characterized in that said projections (151, 152, 15p) are distributed relative to a reference plane according to a common design on the periphery of each element (15), the projections of two consecutive elements being aligned so that said fins (161, 162, 16p) are each arranged according to a generatrix of the stack.

3. Gas discharge tube according to claim 1, characterized in that each element (15) further comprises on one of its stacking surfaces at least one annular seal (17).

4. Gas discharge tube according to claim 3, characterized in that each element (15) comprises on one of its stacking surfaces a flange (1502) concentric with the central opening in order to guard the seal from exposure to ultraviolet radiation and to the discharge plasma, and on the other stacking surface a lodging (1501) intended to accommodate the flange (1502) of the ajdacent element (15).

5. Gas discharge tube according to claim 1, characterized in that each element (15) comprises on one of its stacking surfaces at least two concentric annular seals (17).

6. Gas discharge tube according to any of claims 1–5, characterized in that each element (15) is formed from an alloy of metals chosen from the group aluminium, magnesium, silicon, each element (15) comprising an insulating layer of aluminum oxide.

7. Gas discharge tube according to claim 1, characterized in that the basic recirculation circuits (41, 42, 4p) are each formed by at least one tube of which the cross-section is less than the cross-section of the ionisation chamber (1).

8. Gas discharge tube according to claim 7, characterized in that the cross-section S of each tube approaches S/p where S is the cross-section of the ionisation chamber (1) and p the number of basic recirculation circuits.

9. Gas discharge tube according to claims 7 or 8, characterized in that each basic recirculation circuit (41, 42, 4p) is formed from two tubes in a staggered interlaced array, each of the tubes having a length greater than the half length of the ionisation chamber (1).

10. Gas discharge tube according to claim 1, characterized in that the anode (5) with high current density stability permitting transmission of the laser beam is formed by a conducting element (50) comprising a cavity having an axis of revolution in common with the axis of the ionisation chamber (1) and forming a sharp ridge (502) with the outer surface of the conducting element (50) facing the cathode (6) of the discharge tube.

11. Discharge tube according to claim 10, characterized in that the conducting element is formed by a metallic cylinder having an axis perpendicular to the axis of the ionisation chamber (1) the cavity being formed in the cylinder as a truncated cone (501) expanding toward the cathode (6) and prolonged in the opposite direction by an essentially cylindrical opening (503) permitting passage of the laser beam.

12. Gas discharge tube according to claim 11, characterized in that the conducting element is formed from pure copper.

13. Gas discharge tube according to claim 1, characterized in that the tubular element forming the ionisation chamber (1) comprises at each extremity thereof an element (13, 14) for matching the impedance of the ionisation chamber (1) to the impedance of the anode chamber (18) and respectively the cathode chamber (7).

14. Gas discharge tube according to claim 13, characterized in that each matching element (13, 14) comprises a central expanded bore having an axis of revolution in common with the axis of the ionisation chamber (1) the larger opening of each central bore being placed facing the anode (5) and the cathode (6) respectively.

## Patentansprüche

1. Gasentladungsröhre hoher Stromdichte für Laseremission mit sehr hoher Emissionsstabilität, umfassend eine Ionisationskammer (1), gebildet von einem mit einer zentralen runden Öffnung versehenen Rohrelement, umfassend
– einen Wärmetauscher (2) mit Kühlflügeln (161, 162, 16p), angeordnet auf der Aussenwandung der Ionisationskammer (1),
– eine innere Hülle (3), welche die genannten Kühlflügel (161, 162, 16p) umschliesst und im Betrieb die Zirkulation eines Wärme transportierenden Fluids zwischen der genannten inneren Hülle (3) und der Aussenwandung der Ionisationskammer (1) ermöglicht,
– einen Gasrezirkulationskreis (4), umfassend eine Mehrzahl von Elementarrezirkulationskreisen (41, 42, 4p), welche jeweils einen Gasausströmwiderstand besitzen, der grösser ist als derjenige der Ionisationskammer (1),
– eine Anode (5) mit hoher Stabilität der Stromdichte, die die Aussendung der Laserstrahlung ermöglicht,
dadurch gekennzeichnet,
– dass das die Ionisationskammer (1) bildende Rohrelement von einem Stapel aneinanderstossender konzentrischer Metallelemente (15) gebildet ist mit jeweils einer zentralen runden Öffnung (150) sowie einer Mehrzahl von die genannten Flügel bildenden radialen Vorsprüngen (151, 152, 15p) und dass die
– Elementarrezirkulationskreise (41, 42, 4p) auf der Aussenseite der inneren Hülle (3) angeordnet sind.

2. Gasentladungsröhre nach Anspruch 1, dadurch gekennzeichnet, dass die genannten Vorsprünge (151, 152, 15p) relativ zu einer Referenzebene gemäss einunddemselben Muster auf der Peripherie jedes Elementes (15) verteilt sind, wobei die Vorsprünge zweier aufeinanderfolgender Elemente derart ausgefluchtet sind, dass die genannten Flügel (161, 162, 16p) jeweils längs einer Mantellinie des genannten Stapels angeordnet sind.

3. Gasentladungsröhre nach Anspruch 1, dadurch gekennzeichnet, dass jedes Element (15) zusätzlich auf einer seiner Stapelseiten mindestens eine ringförmige Dichtung (17) umfasst.

4. Gasentladungsröhre nach Anspruch 3, dadurch gekennzeichnet, dass jedes Element (15) auf einer seiner Stapelseiten eine bezüglich der Zentralöffnung konzentrische Auskragung (1502) aufweist zum Schutz der Dichtung gegen das Auftreffen von Ultraviolettstrahlung und Entladungsplasma sowie auf der anderen Stapelseite eine Ausnehmung (1501) aufweist, bestimmt zur Aufnahme der Auskragung (1502) des benachbarten Elements (15).

5. Gasentladungsröhre nach Anspruch 1, dadurch gekennzeichnet, dass jedes Element (15) auf einer seiner Stapelseiten mindestens zwei ringförmige konzentrische Dichtungen (17) aufweist.

6. Gasentladungsröhre nach einem der Ansprüche 1 bis 5, dadurch gekennzeichnet, dass jedes Element (15) von einer Metall-Legierung gebildet ist, enthalten in der Gruppe Aluminium, Magnesium, Silizium, wobei jedes Element (15) eine Aluminiumoxydisolationsschicht aufweist.

7. Gasentladungsröhre nach Anspruch 1, dadurch gekennzeichnet, dass die Elementarrezirkulationskreise (41, 42, 4p) jeweils von mindestens einem Rohr mit einem Querschnitt gebildet sind, der kleiner ist als der Querschnitt der Ionisationskammer (1).

8. Gasentladungsröhre nach Anspruch 7, dadurch gekennzeichnet, dass der Querschnitt s jedes Rohres etwa S/p beträgt, worin S der Querschnitt der Ionisationskammer (1) ist und p die Anzahl von Elementarrezirkulationskreisen.

9. Gasentladungsröhre nach Anspruch 7 oder 8, dadurch gekennzeichnet, dass jeder Elementarrezirkulationskreis (41, 42, 4p) von zwei in Windung angeordneten Rohren gebildet ist, wobei jedes Rohr eine Länge aufweist, die grösser ist als die Halblänge der Ionisationskammer (1).

10. Gasentladungsröhre nach Anspruch 1, dadurch gekennzeichnet, dass die Anode (5) hoher Stromdichtestabilität, welche die Laserstrahlungsaussendung ermöglicht, von einem leitenden Element (50) gebildet ist mit einer Ausnehmung, die eine mit der Achse der Ionisationskammer (1) zusammenfallende Umlaufachse besitzt und mit der Aussenfläche des leitenden Elements (50), die der Kathode (5) der Entladungsröhre zugewandt ist, eine scharfe Kante (502) bildet.

11. Gasentladungsröhre nach Anspruch 10, dadurch gekennzeichnet, dass das leitende Element (50) von einem Metallzylinder gebildet ist mit einer Achse, die senkrecht steht zur Achse der Ionisationskammer (1), wobei die in dem Zylinder gebildete Ausnehmung Kegelstumpfform (501) aufweist und sich in Richtung der Kathode (6) öffnet und in entgegengesetzter Richtung durch eine Öffnung (503) verlängert is, die im wesentlichen zylindrisch ist und den Durchtritt des Laserstrahls ermöglicht.

12. Gasentladungsröhre nach Anspruch 11, dadurch gekennzeichnet, dass das leitende Element (50) aus reinem Kupfer gebildet ist.

13. Gasentladungsröhre nach Anspruch 1, dadurch gekennzeichnet, dass das Rohrelement, das die Ionisationskammer (1) bildet, an jedem Ende derselben ein Anpasselement (13, 14) für die Impedanz der Ionisationskammer (1) an die Impedanz der Anodenkammer (18) bzw. der Kathodenkammer (7) aufweist.

14. Gasentladungsröhre nach Anspruch 13, dadurch gekennzeichnet, dass jedes Anpasselement (13, 14) eine sich erweiternde zentrale Bohrung aufweist mit einer Umlaufachse, die mit der Achse der Ionisationskammer (1) zusammenfällt, wobei die grösste Öffnung jeder zentralen Bohrung gegenüber der Anode (5) bzw. der Kathode (6) angeordnet ist.

0 048 690

Fig. 1

9

Fig. 2a

Fig. 2c

Fig. 2b

Fig. 3b

Fig. 3c

A÷A

Fig. 3a

0 048 690